# EUROPÄISCHE PATENTSCHRIFT

(11) **EP 2 029 342 B1**
(45) Veröffentlichungstag und Bekanntmachung des Hinweises auf die Patenterteilung: **07.12.2011**
(21) Anmeldenummer: 07729303.3
(22) Anmeldetag: 21.05.2007
(51) Int. Cl.: B29C 45/04

(54) **SCHLIESSVORRICHTUNG MIT ZWEI SCHIEBETISCHEN**
LOCKING DEVICE WITH TWO SLIDING TABLES
DISPOSITIF DE FERMETURE AVEC DEUX TABLES COULISSANTES

(30) Priorität: 26.05.2006 DE 102006024481
(43) Veröffentlichungstag der Anmeldung: 04.03.2009
(73) Patentinhaber: KraussMaffei Technologies GmbH, 80997 München (DE)
(72) Erfinder: GRUBER, Marco, 81247 München (DE)
(74) Vertreter: Wilhelm, Ludwig
(86) Internationale Anmeldenummer: PCT/EP2007/054859
(87) Internationale Veröffentlichungsnummer: WO 2007/137957

(56) Entgegenhaltungen:
- WO-A-03/013824
- DE-A1- 3 338 685
- US-A1- 2004 094 866

## Beschreibung

Die Erfindung betrifft eine Schließvorrichtung einer Spritzgießmaschine zur Herstellung von Kunststoff-Formteilen gemäß dem Oberbegriff des Anspruchs 1 sowie ein Verfahren zum Betreiben einer solchen Schließvorrichtung gemäß dem nebengeordneten Anspruch 9.

Bei der Herstellung von thermoplastischen Kunststoff-Formteilen wird in einer Plastifizier- und Einspritzeinrichtung ein Kunststoffgranulat aufgeschmolzen und in ein Formwerkzeug eingespritzt, das aus zwei Formhälften besteht, die jeweils auf einer feststehenden und einer beweglichen Formaufspannplatte einer Schließeinheit einer Spritzgießmaschine befestigt sind. Das Formwerkzeug kann je nach Kunststoff-Formteil eine oder mehrere Kavitäten aufweisen. Um eine hohe Produktivität zu erzielen, ist es üblich, die Anzahl der Kavitäten in einem Formwerkzeug zu steigern.

Es ist weiterhin bekannt, Spritzgießmaschinen mit mehreren Werkzeugstationen vorzusehen, wobei die Werkzeuge auf einem Drehtisch oder einem Schiebetisch nacheinander in Spritzposition verfahren werden (Johannaber/Michaeli, Handbuch Spritzgießen, 2001, ISBN 3-446-15632-1, Bild 8.33 und 8.34 auf Seite 1032).

Bei der Herstellung von PUR-Bauteilen nach dem sogenannten Reaktionsgießverfahren (auch RIM genannt, Reaction Injection Molding) werden zwei flüssige reaktionsfähige Komponenten, beispielsweise ein Polyol und ein Polyisocyanat, gegebenenfalls mit Zusatzstoffen versehen, über einen Mischkopf in ein Formwerkzeug ausgetragen oder in dieses eingespritzt. Die bei der Herstellung von PUR-Bauteilen üblichen Formwerkzeuge weisen in der Regel nur eine geringe Zuhaltekraft auf, so dass die PUR-Bauteile häufig nicht gratfrei hergestellt werden können. Dies macht eine manuelle Nacharbeit erforderlich, wodurch die Zykluszeiten für die Fertigstellung eines Bauteils relativ lang werden.

Aus dem Stand der Technik ist es bekannt, mehrkomponentige Kunststoff-Formteile mittels einer sogenannten Wendeplattentechnik herzustellen (Johannaber/Michaeli, Handbuch Spritzgießen, 2001, ISBN 3-446-15632-1, Bild 6.80 auf Seite 508). Hierbei wird in einer Schließeinheit zwischen zwei äußeren Formaufspannplatten ein mittleres Formträgerelement, häufig Wendeplatte genannt, drehbar angeordnet. Nachdem in der ersten Trennebene der Vorspritzling hergestellt worden ist, wird dieser mit dem mittleren Formträgerelement in die zweite Trennebene transportiert, wo die zweite Komponente angespritzt wird.

Aus der WO 03/013824 ist es bekannt, mittels der Wendeplattentechnik mehrkomponentige Kunststoff-Formteile aus verschiedenen thermoplastischen Kunststoffen, aus verschiedenen PUR-Kunststoffen oder aus einem thermoplastischen Träger und einer PUR-Gießhaut herzustellen. Auf einem Maschinenrahmen sind zwei äußere Formaufspannplatten verschieblich abgestützt. Zwischen diesen ist ein Tragrahmen auf dem Maschinenbett befestigt, in dem ein mittleres Formträgerelement um eine senkrecht stehende Drehachse drehbar gelagert ist. Das Formträgerelement kann plattenförmig sein und zwei Formhälften aufnehmen; es kann aber auch als Würfel zur Aufnahme von vier Formhälften ausgebildet sein. Die Formaufspannplatten können mittels geeigneter Antriebs- und Verriegelungsmittel auf das mittlere Formträgerelement zu und von diesem wegbewegt sowie mit diesem verriegelt werden. Für die Herstellung eines mehrkomponentigen Kunststoff-Formteils aus einem thermoplastischen Grundbauteil und einer PUR-Gießhaut kann die eine der äußeren Formaufspannplatte mit einem Einspritzaggregat für das thermoplastische Grundbauteil und die andere der äußeren Formaufspannplatten mit einer RIM-Vorrichtung gekoppelt werden. Seitlich der Schließeinheit können Handlingsroboter vorgesehen werden, beispielsweise ein Bearbeitungsroboter einerseits und ein Entnahmeroboter andererseits. Mit dem Bearbeitungsroboter kann beispielsweise eine Oberflächenbehandlung des Grundbauteils erfolgen. In einem ersten Takt wird auf der Seite der Einspritzeinheit zunächst das Grundbauteil aus dem thermoplastischen Kunststoff gespritzt. Nach der erforderlichen Abkühlzeit wird die Schließeinheit geöffnet und es erfolgt eine Oberflächenbehandlung des gerade gespritzten Grundbauteils. Das Formträgerelement wird um 180° gedreht und die Formhälften werden wieder verschlossen. Im nachfolgenden Takt wird einerseits auf der Seite des Einspritzaggregats ein neues thermoplastisches Grundbauteil gespritzt, während auf der gegenüberliegenden Seite über einen Mischkopf das PUR-Reaktionsgemisch in die Form eingespritzt und eine PUR-Haut auf der Oberfläche des Grundbauteils gebildet wird.

In allen oben beschriebenen Fällen zur Wendeplattentechnik wird in der einen Trennebene stets ein Vorspritzling hergestellt und in der anderen Trennebene wird stets die zweite Komponente an diesen Vorspritzling angespritzt, wobei zeitgleich in der ersten Trennebene ein neuer Vorspritzling erzeugt wird.

Ausgehend hiervon liegt der Erfindung die Aufgabe zugrunde, die Wendeplattentechnik dahingehend weiter zu entwickeln, dass damit auch einkomponentige Kunststoff-Formteile, insbesondere PUR-Bauteile, mit einer hohen Produktivität hergestellt werden können.

Diese Aufgabe wird durch eine Vorrichtung mit den Merkmalen von Anspruch 1 sowie mit einem Verfahren gemäß Anspruch 9 gelöst. Vorteilhafte Ausgestaltungen und Weiterentwicklungen finden sich in den Unteransprüchen.

Dadurch, dass an jeder der äußeren Formaufspannplatten ein Schiebetisch mit wenigstens zwei Formhälften und ein mittleres Formträgelement mit wenigstens vier Formhälften vorgesehen ist und die Formhälften auf dem Schiebetisch orthogonal zur Maschinenlängsache verfahren werden können, kann in jeder Trennebene bzw. Arbeitsebene mit zwei Formwerkzeugen gearbeitet werden. In jeder Trenn- oder Arbeitsebene befindet sich ein Formwerkzeug in geschlossenem Zustand und kann mit Material gefüllt werden, während gleichzeitig die Formhälften des jeweils freien Formwerkzeugs der beiden Trennebenen frei zugänglich sind. Dabei befinden sich zwei der freien Formhälften auf dem mittleren Formträgeelement und weisen nach außen, während sich die beiden anderen freien Formhälften auf den Schiebetischen befinden.

Die Schiebetische können zwischen Bedienseite und Bediengegenseite abwechselnd verfahren werden, so dass sich die freien Formhälften auf den Schiebetischen stets auf unterschiedlichen Seiten bezogen auf die Maschinenlängsachse befinden.

Auf der Bedien- und der Bediengegenseite kann je ein Arbeitsplatz für einen Werker eingerichtet werden. Die Aufgabe der Werker ist es, während eines laufenden Zyklus den nachfolgenden Zyklus vorzubereiten. Hierzu können an den freien Formhälften auf dem Schiebetisch und dem mittleren Formträgerelement beispielsweise folgende Arbeiten vorgenommen werden: Entnahme des fertigen Bauteils, Reinigen der Formhälften falls notwendig, Einbringen von Einlegeteilen. Ein Werker arbeitet immer auf einer Seite und zwar an dem mittleren Formträgerelement an den nach außen zu seiner Seite weisenden freien Formhälften und auf seiner Seite abwechselnd einmal an dem einen Schiebetisch und im nächsten Zyklus an dem gegenüberliegenden Schiebetisch. Die Funktionen der Werker können auch von geeigneten Robotern, z.B. ein oder mehreren Sechs-Achs-Robotern durchgeführt werden.

Bei der Herstellung von PUR-Bauteilen ist es außerdem erforderlich, ein Trennmittel einzubringen, vorzugsweise in alle freien Formhälften, da PUR-Bauteile die Tendenz haben, an der Oberfläche des Formwerkzeugs festzukleben. Außerdem kann es erforderlich sein, die Oberfläche einzulackieren, um einen bestimmten Oberflächeneffekt an dem PUR-Bauteil zu erzielen. Desweiteren ist es insbesondere bei der Herstellung von PUR-Bauteilen erforderlich, die Formhälften gründlich zu reinigen. Die erfindungsgemäße Vorrichtung eignet sich also insbesondere für die Herstellung von PUR-Bauteilen, da die notwendigen Vorbehandlungen der PUR-Formwerkzeuge geschickt in eine vollautomatische Produktion von PUR-Bauteilen integriert werden können.

Die Verwendung einer Spritzgieß-Schließeinheit hat aufgrund der höheren Schließkräfte den weiteren Vorteil, dass die PUR-Bauteile gratfrei hergestellt werden können. Anstelle von PUR-Bauteilen können aber auch sonstige Kunststoff-Formteile hergestellt werden, z.B. aus thermoplastischen oder elastischen Kunststoffen.

Das mittlere Formträgelement kann stationär auf einem Maschinenrahmen abgestützt sein und die beiden äußeren Formaufspannplatten können auf dem Maschinenrahmen hin- und her verfahren und mit dem mittleren Formträgerelement verriegelt werden.

In einer alternativen Ausführungsform kann eine der äußeren Formaufspannplatten auf einem Maschinenrahmen fest montiert sein (feststehende Formaufspannplatte) und die andere äußere Formaufspannplatte kann auf dem Maschinenrahmen verfahren werden (bewegliche Formaufspannplatte). In diesem Fall wird auch das mittlere Formträgerelement verfahren.

Das mittlere Formträgelement kann würfelförmig mit vier Formaufspannflächen und vier Formhälften ausgebildet sein, wobei auf jedem Schiebetisch zwei Formhälften angeordnet sind, die mit korrespondierenden Formhälften auf dem mittleren Formträgerelement zusammen jeweils Formwerkzeuge bilden. Es können bis zu vier verschiedene Formwerkzeuge gleichzeitig betrieben werden (A1, A2, B1, B2). Ein Formwerkzeug kann auch mehrere Kavitäten aufweisen. Es können auch Formwerkzeuge aus mehreren Werkzeugsätzen vorgesehen werden (z.B. zwei gleiche Werkzeuge nebeneinander).

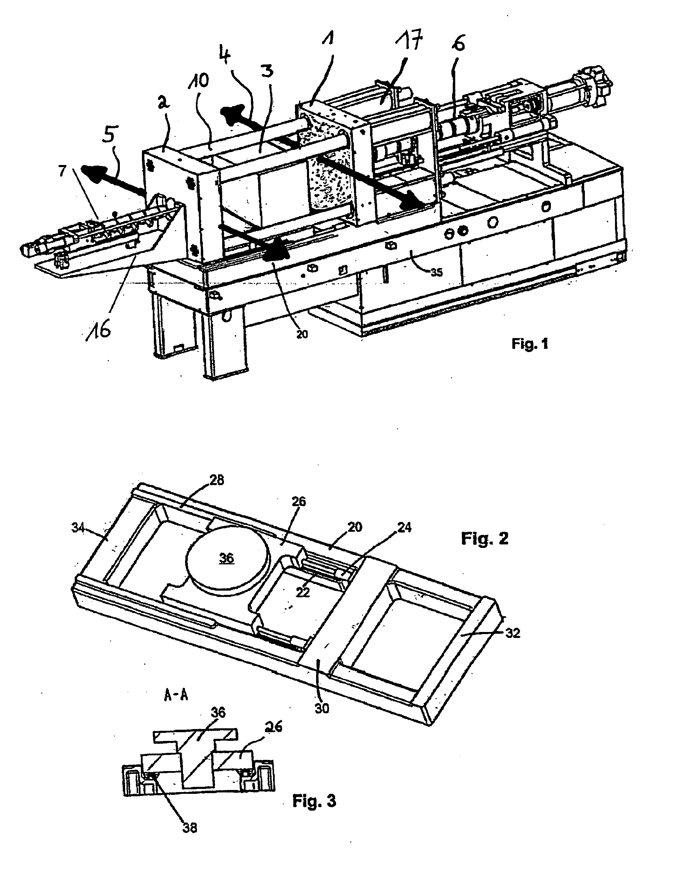

Nachfolgend soll die Erfindung anhand eines Ausführungsbeispiels und unter Bezugnahme auf die Figuren 1 bis 7 näher erläutert werden.
Figur 1 zeigt eine Spritzgießmaschine mit einem Maschinenbett 35, einer festen Formaufspannplatte 1, einer beweglichen Formaufspannplatte 2 und einem mittleren, würfelförmigen Formträgerelement 3. Auf den Formaufspannplatten sind Schiebetische 4 und 5 vorgesehen (wie dies mit den eingezeichneten Pfeilen angedeutet ist), auf denen jeweils zwei Formhälften orthogonal zur Maschinenlängsachse verfahrbar angeordnet sind. Diese Formhälften können zusammen mit Formhälften des Formträgerelements 3 Kavitäten bilden. An der beweglichen Formaufspannplatte 2 sind Säulen 10 befestigt, die durch die feststehende Formaufspannplatte 1 hindurchgeführt und auf der Rückseite der feststehenden Formaufspannplatte mit einem Antrieb 17 verbunden sind. Durch Betätigung des Antriebs 17, beispielsweise jeweils eine Kolben-Zylinder-Einheit an jeder Säule 10, kann die bewegliche Formaufspannplatte 2 auf die feststehende Formaufspannplatte 1 zu oder von ihr weg bewegt werden. Weiterhin dargestellt sind Spritzeinheiten 6 und 7, wobei die Spritzeinheit 7 auf einem an der beweglichen Formaufspannplatte 2 befestigten Gestell 16 und die Spritzeinheit 6 auf dem Maschinenbett 35 abgestützt sind. Der gesamte Aufbau aus Antrieb und Formaufspannplatten ist auf einem Modulrahmen 20 gelagert, der seinerseits auf dem Maschinenbett 35 der Spritzgießmaschine befestigt ist.
Fig.2 zeigt in perspektivischer Aufsicht Einzelheiten des Modulrahmens und Fig. 3 zeigt einen Schnitt durch den Drehteller im Modulrahmen. In dem Modulrahmen 20 ist eine Grundplatte 26 in Linearführungen 22 verschieblich gelagert, wobei die Grundplatte 26 über Hydraulikzylinder 24 oder Spindeltriebe oder dergleichen in Maschinenlängsrichtung verschoben werden kann. Die Grundplatte 26 trägt einen Drehteller 36, der mittels geeigneter Lager auf der Grundplatte 26 drehbar gelagert ist. Desweiteren weist der Modulrahmen an seiner Oberseite Gleitführungen 28 für die bewegliche Formaufspannplatte 2 auf. Eine Strebe 30 dient der Aufnahme der feststehenden Formaufspannplatte 1. Streben 32 und 34 schließen den Modulrahmen nach außen ab und dienen beispielsweise der Abstützung der Platte des Antriebs. Der drehbar gelagerte Drehteller 36 kann beispielsweise über einen Zahnkranz und ein damit kämmendes Ritzel angetrieben werden, wie es aus der WO 01/10624 A1 bekannt ist.

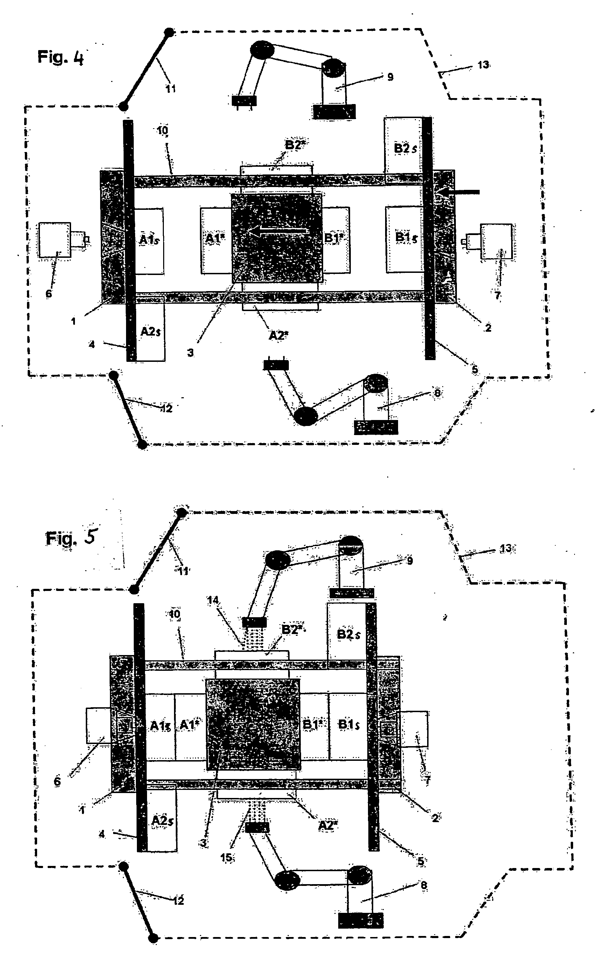

Bei der Herstellung von PUR-Bauteilen wird anstelle der Spritzeinheit 7 ein erster PUR-Mischkopf an der beweglichen Formaufspannplatte 2 angedockt und anstelle der Spritzeinheit 6 ein zweiter PUR-Mischkopf an die feststehende Formaufspannplatte 1 angedockt. Die Mischköpfe können aber auch an Formhälften angedockt werden. Die Mischköpfe können an eine gemeinsame PUR-Dosieranlage angeschlossen sein oder es kann jedem PUR-Mischkopf eine eigene PUR-Dosieranlage zugeordnet werden. Anhand der nachfolgenden schematischen Figuren 4 bis 7 soll der Verfahrensablauf anhand der Herstellung von PUR-Bauteilen näher beschrieben werden.

In der Figur 4 ist die Schließeinheit der Spritzgießmaschine aus Figur 1 schematisch in Draufsicht dargestellt, wobei an den Formaufspannplatten 1 und 2 PUR-Mischköpfe 6 und 7 bereitgehalten werden, die mit hier nicht näher dargestellten und für sich genommen bekannten PUR-Dosierstationen sowie diesen vorgeschalteten Arbeitsbehältern für die Ausgangssubstanzen verbunden sind. Zu beiden Seiten der Schließeinheit befinden sich Roboter 8 und 9 zur Ausführung von Zusatzarbeiten an den freien Formhälften. Die gesamte Anlage ist von einem Sicherheitszaun 13 umgeben und kann nur über jeweils auf der Bedienseite (in den Figuren 4 bis 7 die jeweils obere Seite) und der Bediengegenseite (in den Figuren 4 bis 7 die jeweils untere Seite) eingebaute Zugangstore 11 und 12 betreten werden. Insgesamt sind vier Formwerkzeuge A1, A2, B1, B2 im Einsatz, mit denen gleiche oder unterschiedliche PUR-Bauteile hergetellt werden können. Jedes der Formwerkzeuge besteht aus einer Formhälfte auf einem der Schiebetische 4, 5 und einer korrespondierenden Formhälfte auf dem mittleren Formträgerelement 3. Die Formhälften auf den Schiebetischen werden nachfolgend mit dem Zusatz "s" bezeichnet werden, d.h. A1s, A2s, B1s und B2s, wohingegen die Formhälften auf dem mittleren Formträgerelement nachfolgend mit einem Asteriskus "*" als Zusatz bezeichnet werden sollen, d.h. A1*, A2*, B1* und B2*. Vorliegend sind die Formhälften A1s und A2s auf dem Schiebetisch 4 an der feststehenden Formaufspannplatte 1 angeordnet und die Formhälften B1s und B2s auf dem Schiebetisch 5 an der beweglichen Formaufspannplatte 2. Die sich außerhalb der Maschinenlängsachse befindlichen jeweils frei zugänglichen Formhälften sollen nachfolgend auch als freie Formhälften bezeichnet werden. Die Figur 4 zeigt die Situation unmittelbar vor dem mit den Pfeilen angedeuteten Zufahren der Schließeinheit.

In der Figur 5 befindet sich die Schließeinheit in geschlossenem Zustand, wobei die PUR-Mischköpfe 6 und 7 an die Formaufspannplatten angedockt sind. Die Formhälften A1s und A1* sowie die Formhälften B1s und B1* sind geschlossen und bilden jeweils eine oder mehrere Kavitäten, in die ein PUR-Gemisch über geeignete Angußkanäle eingespritzt werden kann. Die auf der Bedienseite befindlichen freien Formhälften B2s, B2* sowie die auf der Bediengegenseite befindlichen freien Formhälften A2s und A2* können mittels der Roboter 8 und 9 vorbehandelt und für den nächsten Schuß vorbereitet werden. Beispielsweise kann ein Trennmittel 14, 15 zunächst auf die Formhälften A2* und B2* und gegebenenfalls nachfolgend auch auf die Formhälften A2s und B2s gesprüht werden. Wenn die Vorbehandlung der freien Formhälften abgeschlossen und die PUR-Bauteile in den Kavitäten genügend ausreagiert sind, kann die Schließeinheit aufgefahren werden.

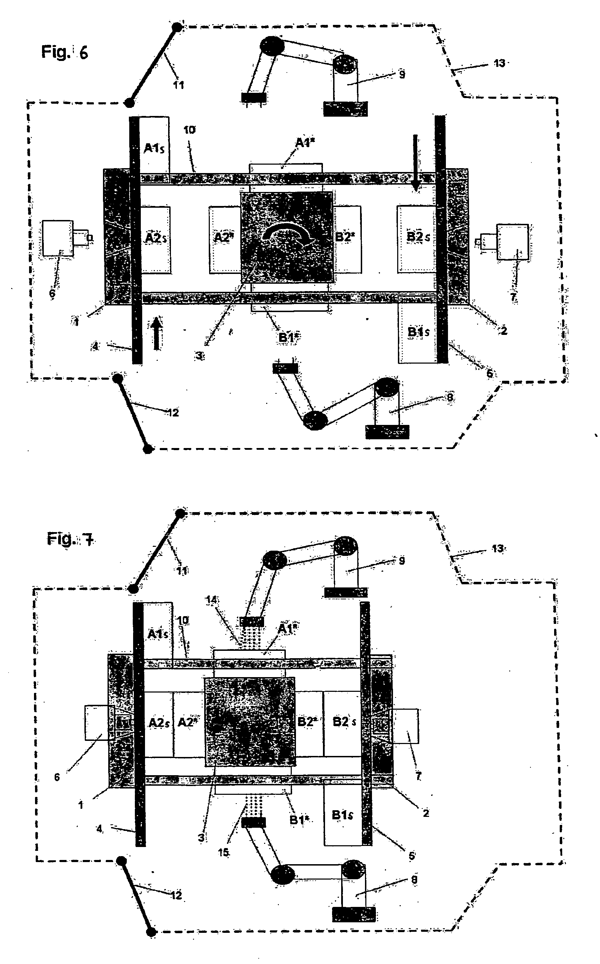

Nachfolgend (siehe Figur 6) werden die PUR-Mischköpfe 6 und 7 von den Formhälften zurückgefahren. Das mittlere Formträgerelement 3 wird um 90° im Uhrzeigersinn gedreht. Die Formhälften A1s und A2s auf dem Schiebetisch 4 werden in Richtung der Bedienseite verfahren und die Formhälften B1s und B2s auf dem Schiebetisch 5 werden in die entgegengesetzte Richtung, d.h. in Richtung der Bediengegenseite verfahren. Die zuvor vorbehandelten Formhälften A2s, A2*, B2s und B2* befinden sich auf der Maschinenlängsachse und können nachfolgend zugefahren werden, um neue Kavitäten zu bilden. Je nach Ausgestaltung der Formwerkzeuge befinden sich die PUR-Bauteile in den Formhälften auf dem mittleren Formträgerelement (A1*, B1*) oder in den Formhälften auf den Schiebetischen (A1s, B1s). Sie können von Werkem oder von Robotern aus den Formhälften entnommen werden. Beispielsweise können die Roboter 8 und 9 neben den Sprühköpfen für das Trennmittel auch über Greifer für die PUR-Bauteile verfügen. Es können aber auch Auswerfer vorgesehen werden, um die PUR-Bauteile aus den Formhälften auszustoßen.

In einem nachfolgenden Schritt wird die Schließeinheit wieder zugefahren (Figur 7), wobei die Formhälften A2s und A2* in der einen Trennebene und die Formhälften B2s und B2* in der anderen Trennebene geschlossen werden und neue Kavitäten für die nächsten PUR-Bauteile gebildet werden. Die PUR-Mischköpfe 6 und 7 werden wieder an die Formaufspannplatten herangefahren und an die Formhälften A2s und B2s angedockt, so dass über geeignete Angußkanäle oder gegebenenfalls angußlos PUR-Gemisch in die Kavitäten der Formwerkzeuge A2 und B2 eingespritzt werden kann. Parallel dazu können die freien Formhälften A1s, A1* von dem Roboter 9 auf der Bedienseite und die freien Formhälften B1s, B1* von dem Roboter 8 auf der Bediengegenseite mit einem Trennmittel 14, 15 eingesprüht werden.

Wenn die Vorbehandlung der freien Formhälften A1s, A1*, B1s, B1* abgeschlossen und die PUR-Bauteile in den Kavitäten der Formwerkzeuge A2, B2 genügend ausreagiert sind, kann die Schließeinheit aufgefahren werden. Die PUR-Mischköpfe werden wieder von den Formhälften zurückgefahren und das mittlere Formträgerelement 3 wird um 90° im Gegenuhrzeigersinn gedreht. Die Formhälften A1s und A2s auf dem Schiebetisch 4 werden in Richtung der Bediengegenseite verfahren und die Formhälften B1s und B2s auf dem Schiebetisch 5 werden in die entgegengesetzte Richtung, d.h. in Richtung der Bedienseite verfahren. Nunmehr ist wieder der Zustand erreicht, wie er in der Figur 4 dargestellt ist, und einer neuer Zyklus kann beginnen.

Über die PUR-Mischköpfe 6 und 7 können in die Formwerkzeuge A1 und A2 einerseits sowie in die Formwerkzeuge B1 und B2 andererseits jeweils identische oder aber auch unterschiedliche PUR-Gemische eingespritzt werden. Die PUR-Gemische können sich beispielsweise in ihrer Farbe und/oder in ihrem Aufschäumgrad unterscheiden.

Anstelle der in Figur 1 dargestellten hydraulischen Zwei-Platten-Schließeinheit können auch andere Schließeinheiten von Spritzgießmaschinen vorgesehen werden. Solche Schließeinheiten sind für sich genommen bekannt, beispielsweise aus Johannaber/Michaeli, Handbuch Spritzgießen, 2001, ISBN 3-446-15632-1, Kapitel 7.8, Seiten 827 - 882.

### Bezugszeichenliste

- 1: Feststehende Formaufspannplatte
- 2: Bewegliche Formaufspannplatte
- 3: Mittleres Formträgerelement
- 4: Schiebetisch an feststehender Formaufspannplatte
- 5: Schiebetisch an beweglicher Formaufspannplatte
- 6: Erstes Spritzaggreagt oder erster PUR-Mischkopf
- 7: Zweites Spritzaggregat oder zweiter PUR-Mischkopf
- 8: Erster Roboter
- 9: Zweier Roboter
- 10: Säulen
- 11: Erste Zugangstor
- 12: Zweite Zugangstor
- 13: Sicherheitszaun
- 14: Trennmittelspray
- 15: Trennmittelspray
- 16: Gestell
- 17: Antrieb
- 20: Modulrahmen
- 22: Linearführungen
- 24: Hydraulikzylinder
- 26: Grundplatte
- 28: Gleitführungen
- 30: Strebe
- 32: Strebe
- 34: Strebe
- 35: Maschinenbett
- 36: Drehteller

## Patentansprüche

1. Schließvorrichtung einer Spritzgießmaschine zur Herstellung von Kunststoff-Formteilen, umfassend zwei äußere Formaufspannplatten (1, 2) und ein mittleres drehbares Formträgerelement (3), wobei die äußeren Formaufspannplatten (1, 2) und das mittlere Formträgerelement (3) in eine geschlossene Stellung und eine geöffnete Stellung verfahren werden können,
**dadurch gekennzeichnet, dass**
an jeder der äußeren Formaufspannplatten (1, 2) ein Schiebetisch (4, 5) vorgesehen ist, wobei an jedem Schiebetisch (4, 5) zumindest zwei Formhälften (A1s, A2s bzw. B1s, B2s) vorgesehen sind und an diesem orthogonal zur Maschinenlängsache verfahren werden können, und wobei die Formhälften (A1s, A2s bzw. B1s, B2s) auf jedem Schiebetisch in Schließstellung mit korrespondierenden Formhälften (A1*, A2*, bzw. B1*, B2*) auf dem mittleren Formträgerelement (3) bringbar sind.

2. Vorrichtung nach Anspruch 1,
**dadurch gekennzeichnet, dass**
an den beiden äußeren Formaufspannplatten (1, 2) PUR-Mischköpfe (6, 7) vorgesehen sind.

3. Vorrichtung nach Anspruch 1 oder 2,
**dadurch gekennzeichnet, dass**
zu beiden Seiten der Maschinenlängsachse Roboter (8, 9) vorgesehen sind, die Einrichtungen zur Vorbehandlung der freien Formhälften und Greifer zum Entnehmen von fertigen Kunststoff-Formteilen aufweisen.

4. Vorrichtung nach einem der Ansprüche 1 bis 3,
**dadurch gekennzeichnet, dass**
sich die Schiebetische (4, 5) jeweils soweit zu beiden Seiten der Maschinenlängsachse erstrecken, dass die Formhälften (A1s, A2s, B1s, B2s) auf den Schiebetischen auf jeder Seite der Maschinenlängsache aus der Schließeinheit heraus verfahren werden können.

5. Vorrichtung nach einem der Ansprüche 1 bis 4,
**dadurch gekennzeichnet, dass**
es sich um eine hydraulische Schließeinheit einer Spritzgießmaschine handelt.

6. Vorrichtung nach einem der Ansprüche 1 bis 4,
**dadurch gekennzeichnet, dass**
es sich um eine elektrische Schließeinheit einer Spritzgießmaschine handelt.

7. Vorrichtung nach einem der Ansprüche 2 bis 6,
**dadurch gekennzeichnet, dass**
ein oder mehrere Dosieraggregate und ein oder mehrere Arbeitsbehälter für die PUR-Ausgangssubstanzen vorgesehen sind.

8. Vorrichtung nach einem der Ansprüche 1 bis 7,
**dadurch gekennzeichnet, dass**
das mittlere Formträgerelement (3) zumindest vier Formaufspannflächen aufweist, auf denen Formhälften (A1*, A2*; B1*, B2*) von Formwerkzeugen (A1, A2, B1, B2) vorgesehen sind.

9. Verfahren zum Betreiben einer Vorrichtung nach einem der Ansprüche 1 bis 8,
**dadurch gekennzeichnet, dass**
die Formhälften (A1s, A2s) des einen Schiebetisches (4) und die Formhälften (B1s, B2s) des anderen Schiebetisches (5) von Zyklus zu Zyklus in entgegengesetzte Richtungen zwischen der Bedienseite und der Bediengegenseite hin und her verfahren werden, wobei auf jedem Schiebetisch jeweils eine Formhälfte aus der Schließeinheit herausgefahren wird und die andere Formhälfte auf der Maschinenlängsachse positioniert wird.

10. Verfahren nach Anspruch 9,
**dadurch gekennzeichnet, dass**
das mittlere Formträgerelement von Zyklus zu Zyklus um 90° im Uhrzeigersinn und im Gegenuhrzeigersinn gedreht wird.

11. Verfahren nach Anspruch 9 oder 10 für die Herstellung von PUR-Bauteilen, wobei jeder Formaufspannplatte ein PUR-Mischkopf zugeordnet ist,
**dadurch gekennzeichnet, dass**
die PUR-Mischköpfe in jedem Zyklus zum Einspritzen des PUR-Gemischs an die Formhälften herangefahren und dort angedockt werden und dass sie nach Beendigung des Einspritzens in eine zurückgezogene Position verfahren werden

12. Verfahren nach einem der Ansprüche 9 bis 11,
**dadurch gekennzeichnet, dass**
an den freien Formhälften des mittleren Formträgerelements und an den freien Formhälften auf den Schiebetischen eine Vorbehandlung vorgenommen wird, während in den geschlossenen Formwerkzeugen Kunststoff-Formteile hergestellt werden.

13. Verfahren nach Anspruch 12 für die Herstellung von PUR-Bauteilen,
**dadurch gekennzeichnet, dass**
an allen freien Formhälften eine Vorbehandlung erfolgt, beispielsweise Eintrennen, Einlackieren, Säubern, während in den geschlossenen Formwerkzeugen PUR-Bauteile hergestellt werden.

## Claims

1. A closing device of an injection moulding machine for the production of plastic shaped parts, comprising two outer mould clamping plates (1, 2) and one central rotatable mould carrier element (3), wherein the outer mould clamping plates (1, 2) and the central mould carrier element (3) can be moved into a closed position and an opened position,
**characterized in that**
on each of the outer mould clamping plates (1, 2) a sliding table (4, 5) is provided, wherein on each sliding table (4, 5) at least two mould halves (A1s, A2s or respectively B1s, B2s) are provided and can be moved thereon orthogonally to the longitudinal axis of the machine, and wherein the mould halves (A1s, A2s or respectively B1s, B2s) on each sliding table are able to be brought into the closed position with corresponding mould halves (A1*, A2* or respectively B1*, B2*) on the central mould carrier element (3).

2. The device according to claim 1,
**characterized in that**
PUR mixing heads (6, 7) are provided on the two outer mould clamping plates (1, 2).

3. The device according to claim 1 or 2,
**characterized in that**
robots (8, 9) are provided on both sides of the longitudinal axis of the machine, which have arrangements for the pre-treatment of the free mould halves and grippers for removing finished plastic shaped parts.

4. The device according to one of claims 1 to 3,
**characterized in that**
the sliding tables (4, 5) extend respectively so far on both sides of the longitudinal axis of the machine that the mould halves (A1s, A2s, B1s, B2s) on the sliding tables on each side of the longitudinal axis of the machine can be moved out from the closing unit.

5. The device according to one of claims 1 to 4,
**characterized in that**
it is a hydraulic closing unit of an injection moulding machine.

6. The device according to one of claims 1 to 4,
**characterized in that**
it is an electric closing unit of an injection moulding machine.

7. The device according to one of claims 2 to 6,
**characterized in that**
one or several dosing units and one or several working containers for the PUR starting substances are provided.

8. The device according to one of claims 1 to 7,
**characterized in that**
the central mould carrier element (3) has at least four moulding clamping surfaces, on which mould halves (A1*, A2*; B1*, B2*) of moulding tools (A1, A2, B1, B2) are provided.

9. A method for operating a device according to one of claims 1 to 8,
**characterized in that**
the mould halves (A1s, A2s) of the one sliding table (4) and the mould halves (B1s, B2s) of the other sliding table (5) are moved to and fro from cycle to cycle in opposite directions between the operating side and the opposite to the operating side, wherein on each sliding table respectively a mould half is moved out from the closing unit and the other mould half is positioned on the longitudinal axis of the machine.

10. The method according to claim 9,
**characterized in that**
the central mould carrier element is rotated from cycle to cycle through 90° clockwise and anticlockwise.

11. The method according to claim 9 or 10 for the production of PUR components, wherein a PUR mixing head is associated with each mould clamping plate,
**characterized in that**
the PUR mixing heads in each cycle for injecting of the PUR mixture are brought up to the mould halves and are docked there and that after completion of the injecting, they are moved into a withdrawn position.

12. The method according to one of claims 9 to 11,
**characterized in that**
a pre-treatment is carried out at the free mould halves of the central mould carrier element and at the free mould halves on the sliding tables, whilst plastic shaped parts are produced in the closed moulding tools.

13. The method according to claim 12 for the production of PUR components,
**characterized in that**
a pre-treatment takes place at all mould halves, for example applying release agent, lacquering, cleaning, whilst PUR components are produced in the closed moulding tools.

## Revendications

1. Dispositif de fermeture d'une machine de moulage par injection pour fabriquer des pièces moulées en plastique, comprenant deux plaques de serrage de moule extérieures (1, 2) et un élément de support de moule rotatif central (3), sachant que les plaques de serrage de moule extérieures (1, 2) et l'élément de support de moule rotatif central (3) peuvent être déplacés dans une position fermée et une position ouverte,
**caractérisé en ce que** sur chacune des plaques de serrage de moule extérieures (1, 2), une table coulissante (4, 5) est prévue, sachant que sur chaque table coulissante (4, 5) au moins deux moitiés de moule (A1s, A2s, respectivement B1s, B2s) sont prévues et peuvent être déplacées sur celle-ci de manière orthogonale à l'axe longitudinal de la machine, et sachant que les moitiés de moule (A1s, A2s, respectivement B1s, B2s) peuvent être amenées sur chaque table coulissante en position de fermeture avec des moitiés de moule correspondantes (A1*, A2*, respectivement B1*, B2*) sur l'élément de support de moule rotatif central (3).

2. Dispositif selon la revendication 1, **caractérisé en ce que** des têtes de mélange PUR (6, 7) sont prévues sur les deux plaques de serrage de moule extérieures (1, 2).

3. Dispositif selon la revendication 1 ou 2, **caractérisé en ce que** des robots (8, 9) sont prévus sur les deux côtés de l'axe longitudinal de la machine, lesquels présentent des dispositifs pour pré-traiter les moitiés de moule libres et des grappins pour retirer les pièces moulées en plastique prêtes.

4. Dispositif selon l'une des revendications 1 à 3, **caractérisé en ce que** les tables coulissantes (4, 5) peuvent s'étendre chacune si loin sur les deux côtés de l'axe longitudinal de la machine que les moitiés de moule (A1s, A2s, B1s, B2s) sur les tables coulissantes de chaque côté de l'axe longitudinal de la machine peuvent être sorties de l'unité de fermeture.

5. Dispositif selon l'une des revendications 1 à 4, **caractérisé en ce qu'**il s'agit d'une unité de fermeture hydraulique d'une machine de moulage par injection.

6. Dispositif selon l'une des revendications 1 à 4, **caractérisé en ce qu'**il s'agit d'une unité de fermeture électrique d'une machine de moulage par injection.

7. Dispositif selon l'une des revendications 2 à 6, **caractérisé en ce qu'**un ou plusieurs groupe(s) de dosage et un ou plusieurs récipient(s) de travail sont prévus pour les substances de départ PUR.

8. Dispositif selon l'une des revendications 1 à 7, **caractérisé en ce que** l'élément de support de moule rotatif central (3) présente au moins quatre surfaces de serrage de moule sur lesquelles des moitiés de moule (A1*, A2*, B1*, B2*) d'outils de moule (A1, A2, B1, B2) sont prévues.

9. Procédé d'exploitation d'un dispositif selon l'une des revendications 1 à 8, **caractérisé en ce que** les moitiés de moule (A1s, A2s) de l'une table coulissante (4) et les moitiés de moule (B1s, B2s) de l'autre table coulissante (5) effectuent un va-et-vient de cycle en cycle dans des directions opposées entre le côté de service et le contre-côté de service, sachant que sur chaque table coulissante, une moitié de moule respective est sortie de l'unité de fermeture et l'autre moitié de moule est positionnée sur l'axe longitudinal de la machine.

10. Procédé selon la revendication 9, **caractérisé en ce que** l'élément de support de moule rotatif central est tourné de cycle en cycle de 90°C dans le sens horaire et dans le sens anti-horaire.

11. Procédé selon la revendication 9 ou 10 pour la fabrication de pièces de construction PUR, dans lequel une tête de mélange PUR est attribuée à chaque plaque de serrage de moule, **caractérisé en ce que** les têtes de mélange PUR sont approchées sur les moitiés de moule à chaque cycle pour injecter le mélange PUR et y sont accrochées et qu'après la fin de l'injection, elles sont déplacées dans une position de retour.

12. Procédé selon l'une des revendications 9 à 11, **caractérisé en ce que** sur les moitiés de moule libres de l'élément de support de moule rotatif central et sur les moitiés de moule libre sur les tables coulissantes, un pré-traitement est effectué pendant que des pièces moulées en plastique sont fabriquées dans les outils de moule fermés.

13. Procédé selon la revendication 12 pour la fabrication de pièces de construction PUR, **caractérisé en ce qu'**un pré-traitement est effectué sur toutes les moitiés de moule libres, par exemple, séparation, laquage, nettoyage, pendant que des pièces moulées en plastique sont fabriquées dans les outils de moule fermés.
